# EUROPÄISCHE PATENTSCHRIFT

(11) **EP 0 604 695 B1**
(45) Veröffentlichungstag und Bekanntmachung des Hinweises auf die Patenterteilung: **20.03.1996**
(21) Anmeldenummer: 92811027.9
(22) Anmeldetag: 29.12.1992
(51) Int. Cl.: B29C 45/00, B29C 45/33, A44B 19/26, A44B 19/30

(54) **Verfahren und Werkzeug zur Herstellung eines Reissverschlussschiebers**
Method and apparatus for producing a slide fastener slider
Procédé et dispositif pour fabriquer un curseur pour fermeture à glissière

(43) Veröffentlichungstag der Anmeldung: 06.07.1994
(73) Patentinhaber: Mayerhofer, Friedrich, CH-2543 Lengnau (CH)
(72) Erfinder: Mayerhofer, Friedrich, CH-2543 Lengnau (CH)
(74) Vertreter: AMMANN PATENTANWAELTE AG BERN

(56) Entgegenhaltungen:
- FR-A- 2 145 453
- US-A- 2 509 278
- US-A- 2 736 062
- US-A- 4 210 196
- US-A- 5 073 103

## Beschreibung

Die vorliegende Erfindung bezieht sich auf ein Verfahren zur Herstellung von Reissverschlussschiebern, insbesondere im Spritzgussverfahren, in dem die Zuglasche des Reissverschlussschiebers zusammen mit dem Schieberkörper gespritzt wird.

Ein Verfahren zum Spritzen eines Reissverschlussschiebers mit Zuglasche ist im europäischen Patent Nr. 0 282 987 beschrieben. Gemäss dieser Patentschrift wird in einem ersten Spritzgang der Schieberkörper gespritzt. Der Bügel am Schieberkörper, der später die Zuglasche aufnimmt, wird durch einen eingeschobenen Formkern mit verschiebbar einliegendem Hilfskern geformt. Zum Spritzen der Zuglasche wird der Hilfskern herausgezogen. Dadurch ergibt sich ein Spritzkanal, der unter dem Bügel des Schieberkörpers hindurchläuft. Danach wird die Spritzmasse für die Zuglasche injiziert. Vor dem Ausstossen des fertigen Reissverschlussschiebers mit Zuglasche wird dann der Formkern wieder aus der Form herausgezogen.

Gemäss dem Patent US-2,736,062 kann ein Reissverschlussschieber in einem einzigen Spritzgiessvorgang hergestellt werden. Dazu wird ein Spritzgusswerkzeug angegeben mit vier für innherhalb der Form beweglichen Formkernen. Die Formkerne dienen dazu, den Forminnenraum zu trennen. Die entstehenden zwei Teilräume modellieren den Schieberkörper bzw. die Zuglasche. Das Innere des Schieberkörpers wird durch zwei weitere Formkerne ausgebildet, die fest mit jeweils einer Formhälfte verbunden sind.

Mit diesem Werkzeug kann jedoch nur ein einfacher Reissverschlussschieber gespritzt werden. Insbesondere weist der Schieber keine Massnahmen gegen unbeabsichtigtes Öffnen auf.

Eine Aufgabe der vorliegenden Erfindung ist es, ein Verfahren anzugeben, um einen Reissverschlussschieber, dessen Körper und Lasche aus jeweils einem Stück bestehen, mit mindestens einer Sicherung gegen unbeabsichtigtes Öffnen in einem Spritzvorgang herstellen zu können.

Ein derartiges Verfahren ist im Anspruch 1 angegeben. Die weiteren Ansprüche definieren Werkzeuge, die zur Ausführung des Verfahrens geeignet sind, und neuartige Reissverschlussschieber, die nach dem Verfahren erhalten werden können.

Demgemäss werden in eine Form vier Formkerne etwa kreuzförmig eingeschoben, bis sie sich berühren. Die Stossflächen sind dabei so geformt, dass sie insbesondere den am Schieberkörper angebrachten Bügel sowie den Quersteg der Zuglasche ausbilden, der zwischen Bügel und Schieberkörper hindurchtritt. Zwei der Formkerne verfügen zusätzlich über Vorsprünge, die die Verbindung zwischen dem hinteren Bügelende und dem Schieberkörper auftrennen. Damit erhält man ein nur über den Bügel mit dem restlichen Schieberkörper elastisch verbundenes hinteres Teilstück des Schieberkörpers. An diesem Teilstück kann ein Nocken ausgeformt werden, der in den Zwischenraum zwischen den Gliedern des Reissverschlussbandes hineinragt. Man erhält so einen selbstsperrenden Reissverschlussschieber. Die Sperre wird aufgehoben, wenn an der Zuglasche nach vorne oder hinten gezogen wird, und durch eine Keilwirkung der Bügel nach oben gebogen und der Nocken aus dem Reissverschlussband herausgezogen wird.

Die Erfindung soll weiter an einem Ausführungsbeispiel mittels Zeichnungen erläutert werden.
- Fig. 1: zeigt einen nach dem erfindungsgemässen Verfahren hergestellten Reissverschlussschieber in Seitenansicht,
- Fig. 2: zeigt den Schieber in einer Ansicht von oben mit nach vorne geklappter Zuglasche,
- Fig. 3: zeigt eine Ansicht des Schiebers von hinten,
- Fig. 4: zeigt einen Schnitt durch eine Spritzgussform mit den erfindungswesentlichen Vorrichtungen, einem Teilaufriss der Betätigungsorgane für die Formkerne und eine Seitenansicht eines darin geformten Reissverschlussschiebers,
- Fig. 5: zeigt einen Schnitt durch das Werkzeug gemäss den Schnittlinien V bzw. Va,
- Fig. 6: zeigt einen Ausschnitt aus einem Schnitt gemäss der Schnittlinie VI,
- Fig. 7: zeigt einen Schnitt analog Fig. 4 durch eine andere Ausführung des Werkzeugs, und
- Fig. 8: zeigt eine schematische Aufsicht auf eine Werkzeughälfte gemäss der Schnittlinie VI mit den Spritzkanälen.

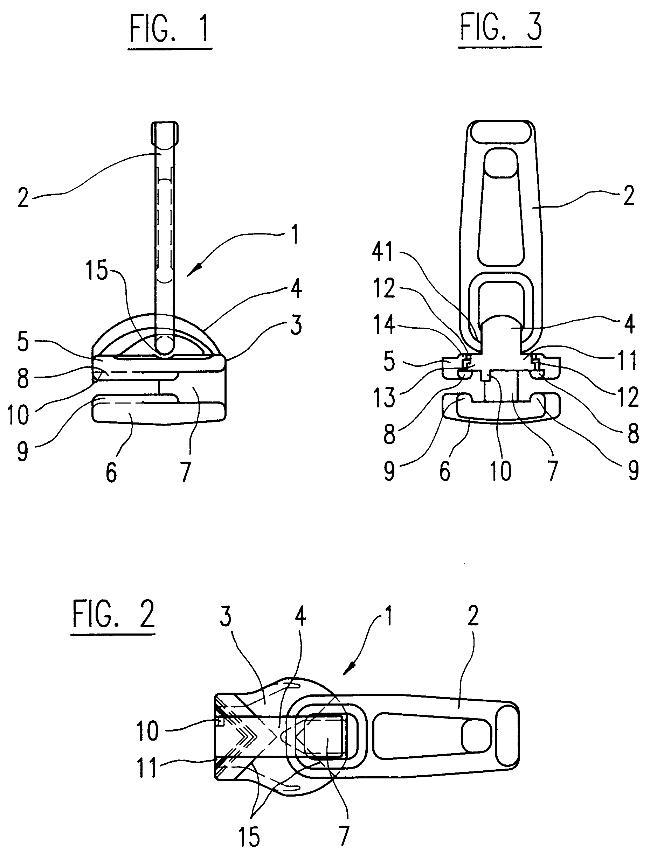

Fig. 1 zeigt einen erfindungsgemäss hergestellten Reissverschlussschieber 1 mit einer Zuglasche 2 und einem Schieberkörper 3. Der Bügel 4 überspannt den Schieberkörper 3 und dient der Befestigung der Zuglasche 2. Der Körper 3 besteht aus der oberen Platte 5 und der unteren Platte 6, die über den Trennkeil 7 verbunden sind. Der Trennkeil 7 dient zusammen mit den Seitenführungen 8 bzw. 9 an der oberen Grundplatte 5 bzw. der unteren Grundplatte 6 in bekannter Weise dem Führen der Gliederbänder während des Oeffnens oder Schliessens des Reissverschlusses.

Der Sperrnocken 10 ist, wie Figuren 2 und 3 verdeutlichen, an einem keilförmigen Teilstück 11 der oberen Platte 5 angeformt. Das Teilstück 11 ist durch einen Spalt 12 von der restlichen Grundplatte 5 getrennt und daher nur über den Bügel 4 mit dem Schieberkörper 3 verbunden. Der Spalt 12 ist bevorzugt stufenförmig ausgebildet, so dass, wenn an der Zuglasche 2 gezogen wird und dadurch über den Bügel 4 das Teilstück 11 nach oben bewegt wird, der Vorsprung 13 des Teils 11 am Vorsprung 14 an der oberen Grundplatte 5 anschlägt und damit die Bewegung nach oben gestoppt wird. In dieser Position ist der Sperrnocken 10 aus dem Zwischenraum der Reissverschlussglieder herausgezogen, und der Schieber 1 kann über die Reissverschlussbänder hinweggezogen werden, während im Ruhezustand, d. h. ohne Zug an der Zuglasche 2, der Sperrnocken 10 in den Zwischenraum zwischen zwei Reissverschlussgliedern hineinragt und damit die Bewegung des Schiebers 1 blockiert.

Zusätzlich können die Seitenführungen wie in Fig. 2 dargestellt in der sogenannten "wing-lock"-Ausführung geformt werden. Die zum Trennkeil 7 hingeführten Enden der Seitenführungen 8 und 9 können sich in die hinteren Enden der Reissverschlussglieder einhaken und damit den Sperrnocken 10 entlasten.

Vorteilhaft wird in der oberen Grundplatte 5 noch eine Vertiefung 15 eingeformt. Die Zuglasche 2 muss dann erst über die Ränder der Vertiefung 15 mit einem bestimmten Kraftaufwand hinweggezogen werden, um den Schieber zu entriegeln.

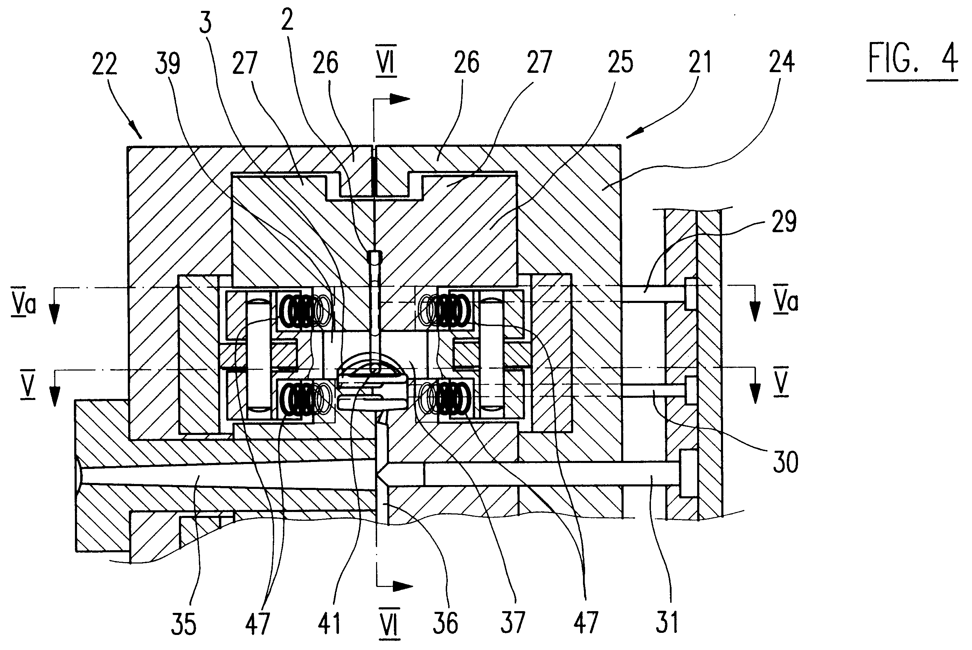

Fig. 4 zeigt einen Schnitt durch ein Werkzeug zur Herstellung des Reissverschlussschiebers 1. Es besteht aus der vorderen Werkzeughälfte 21 und der hinteren Werkzeughälfte 22. Die vordere Werkzeughälfte 21 besteht aus der Betätigungsplatte 24 und der Matrize 25. Die Betätigungsplatte 24 weist noch Krallen 26 auf, die Vorsprünge 27 an der Matrize 25 mit Spiel hintergreifen. Diese Anordnung wirkt als Begrenzung für eine Relativbewegung von der Matrize 25 gegenüber der Betätigungsplatte 24.

Durch die Betätigungsplatte 24 und die Matrize 25 ragen die Ausstosser 29, 30 und 31 für die Zuglasche, den Körper bzw. den Anguss.

Das hintere Werkzeug 22 ist im wesentlichen spiegelbildlich zum vorderen Werkzeug 21 ausgebildet. Statt der Ausstosser 29 bis 31 verläuft jedoch der Angusskanal 33 durch die Betätigungsplatte 34 und die Matrize 35 zum Kanal 36, der die Spritzmasse zu den Formen für den Reissverschlussschieber 1 zuführt.

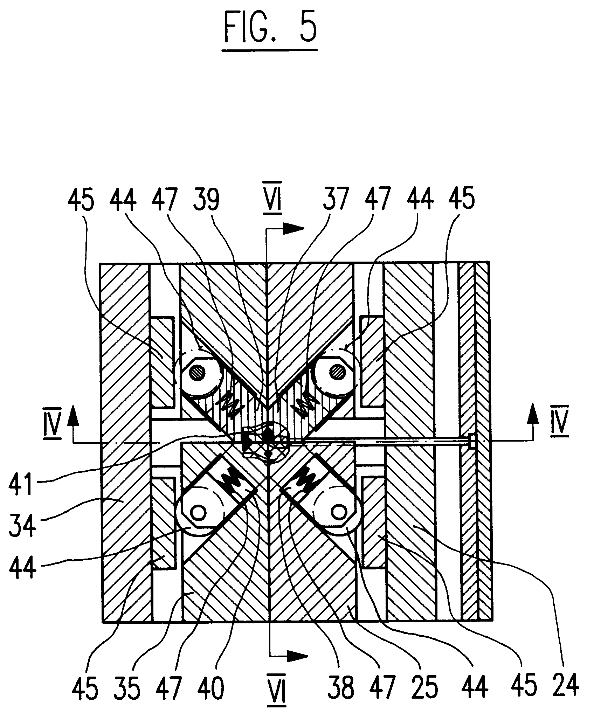

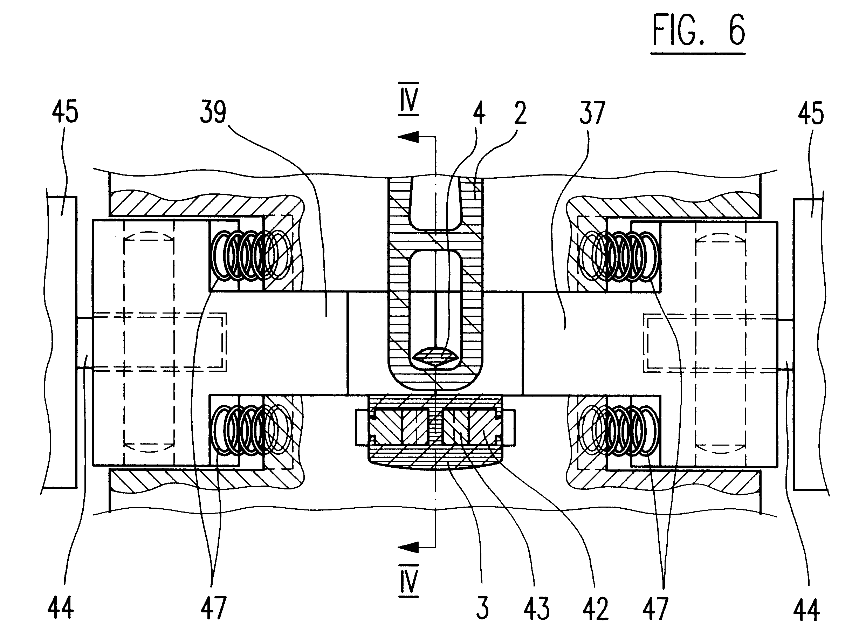

Die Matrizen 25 bzw. 35 weisen in im wesentlichen bekannter Art die Gussformen für den Reissverschlussschieberkörper und die Zuglasche auf. Erfindungsgemäss sind zusätzlich vier Formkerne 37 - 40 in den beiden Matrizen 25 und 35 längsverschiebbar angeordnet. Der Schnitt der Figur 5 zeigt, dass die Formkerne 37 bis 40 in etwa in der Art eines Kreuzes angeordnet sind. Sie können sich längs der Arme des Kreuzes bewegen und sind während des Spritzvorgangs zum Zentrum des Kreuzes zusammengeschoben, wobei sich ihre Frontflächen berühren und die Form für den Reissverschlussschieber 1 vervollständigen. Insbesondere bilden sie dabei die Form für den Steg 41 der Zuglasche 1, der durch die zwischen Bügel 4 und oberer Platte 5 gebildete Oese hindurchtritt. Die Formkerne 37 und 38 sind zusätzlich Teil der Form für die vordere Hälfte des Bügels 4, und zwar insbesondere für die der vorgenannten Oese zugewandte Oberfläche. Entsprechend bilden die Formkerne 39 bis 40 die Form für die der Oese zugewandte Oberfläche der hinteren Hälfte des Bügels 4. Wie Fig. 6 zeigt, wird die in den Matrizen 25 und 35 eingearbeitete Form durch die Formkerne 37 und 40 in zwei vollständig getrennte Formen für den Schieberkörper 3 und die Zuglasche 2 aufgeteilt. Beide Teile können also zum gleichen Zeitpunkt gespritzt werden.

Durch eine entsprechende Formgebung der Unterseite der Formkerne 37 bis 40 kann auch die Vertiefung 15 geformt werden, die sich wegen der Bewegungsrichtung der Formkerne zur Peripherie der oberen Platte 5 hin kegelförmig aufweitet. Die Formkerne 39 und 40 können zusätzlich an der Unterseite Vorsprünge aufweisen, die den Spalt 12 zwischen dem keilförmigen Teil 11 und der oberen Grundplatte 5 ausbilden. Der an dem Teil 11 angeformte Sperrnocken 10 wird durch eine Vertiefung in einem der Vorsprünge 43 und/oder 42 der Matrizen 25 bzw. 35 geformt, die den Innenraum des Schieberkörpers 3 modellieren.

Die Formkerne 37 bis 40 weisen an ihrem hinteren Ende jeweils eine Rolle 44 auf und werden von jeweils mindestens einer Druckfeder 47 nach aussen, d.h. vom Zentrum des Kreuzes weggedrückt, wodurch die Rollen 44 gegen die Druckstücke 45 auf den Betätigungsplatten 24 bzw. 25 angedrückt werden.

Die Funktionsweise des Werkzeugs soll anhand des Oeffnens nach dem Spritzen unter Bezug auf Fig. 5 beschrieben werden. Zuerst werden die Betätigungsplatten 34 und 24 von den jeweiligen Matrizen 25 wegbewegt. Dabei fahren die Formkerne 37 bis 40 unter dem Druck der jeweiligen Feder 47 aus den Forminnenräumen der Matrizen 25 und 35 aus. Dieser Vorgang endet, wenn die jeweiligen Krallen 26 der Betätigungsplatten 24 und 34 an den Vorsprüngen 27 der jeweiligen Matrize 25 bzw. 35 anschlagen. Die Formkerne 37 bis 40 sind dann soweit ausgefahren, dass das Werkzeug geöffnet werden kann. Dazu kann beispielsweise die Betätigungsplatte 24 in Fig. 5 weiter nach rechts gefahren werden, wobei die Matrize 25 mitgenommen wird, und die Ausstosser 29, 30 und 31 können den fertigen Reissverschlussschieber samt Zuglasche aus der Matrize hinausstossen.

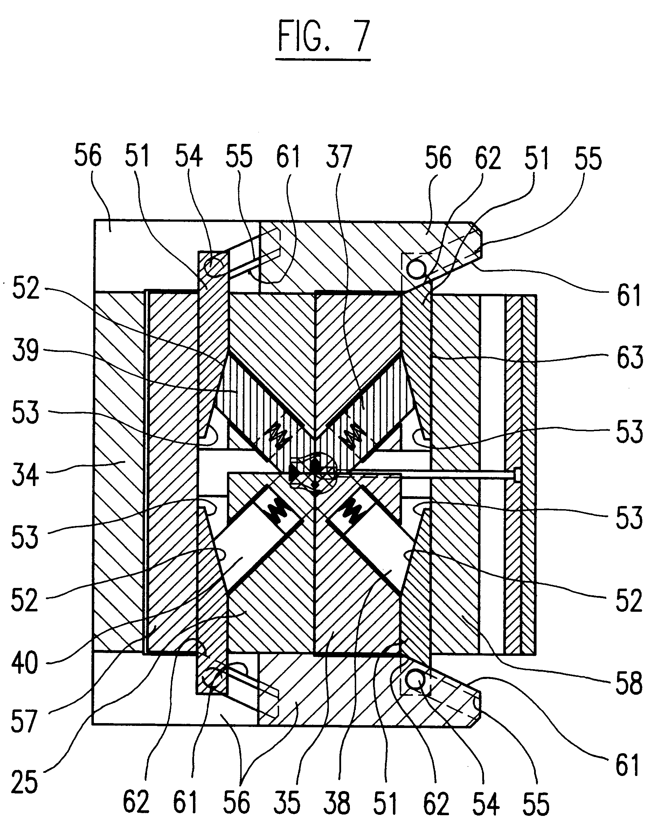

Fig. 7 zeigt eine Variante des Werkzeugs. Die Darstellung ist dabei analog der Fig. 5 und verwendet die gleichen Bezugsziffern, woweit nicht anders definiert. Die Druckstücke 45 sind im wesentlichen durch die Keile 51 ersetzt, die sich im Zwischenraum zwischen den Führungsplatten 57 und 58 und den Matrizen 25 bzw. 35 bewegen können. Die Führungsplatten 57 und 58 sind in festem Abstand zu der jeweiligen Matrize 25 bzw. 35 angebracht, so dass sich eine hochgenaue Führung der Keile 51 ergibt.

Die Formkerne 37 bis 40 verfügen anstatt der Rollen 44 über Gleitflächen 52, mit denen sie über die Schrägen 53 der Keile 51 reibungsarm gleiten können. Die Keile 51 tragen jeweils an ihrem äusseren Ende einen Stift 54, der in eine Nut 55 in einem Steuerstück 56 eingreift. Die Steuerstücke 56 sind an der Matrize 35 bzw. an der Betätigungsplatte 34 angebracht. Zusätzlich werden die Keile 51 über hochgenaue Gleitbahnen 61, die mit entpsrechenden Schrägen 62 an den Keilen 51 zusammenwirken, an exakt bestimmte Positionen eingeschoben. Bewegen sich beim Oeffnen der Form die Betätigungsplatten 24 von den Matrizen 25 bzw. 35 weg, so gleiten die Stifte 54 und in der Folge auch die Keile 51 nach aussen, und die Formkerne 37 bis 40 können aus der Form ausfahren.

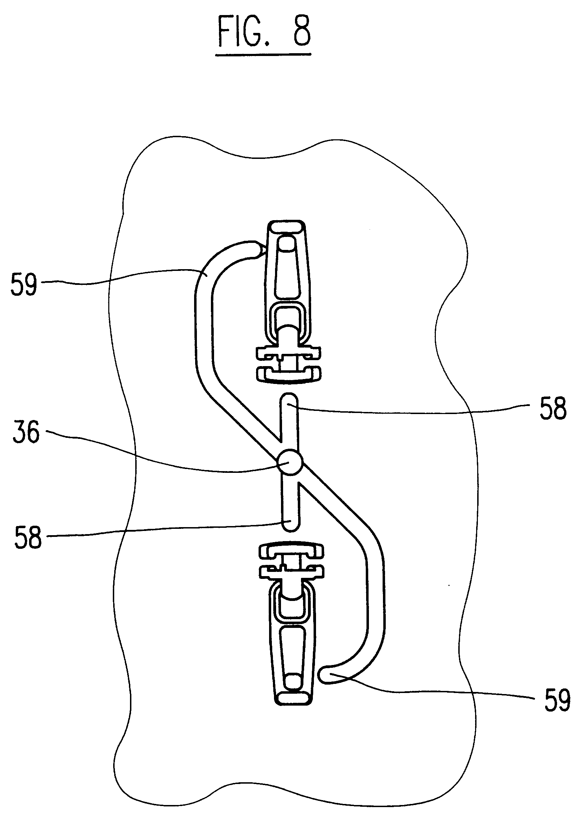

Fig. 8 zeigt noch eine Teilaufsicht auf die Matrize 25 des vorderen Werkzeugs 21 mit einer bevorzugten Ausführungsform des Kanals 36. Insbesondere ist zu sehen, dass für jede der beiden Schieberformen jeweils ein Kanal 59 für das Material zum Spritzen der Zuglasche nötig ist sowie ein zweiter Kanal 58 für das Material zum Spritzen des Körpers 3.

Modifikationen der Erfindung sind im Rahmen des Erfindungsgedankens denkbar. Möglich wäre z. B. auch eine Kombination der Keile 51 mit Rollen 44 anstatt Gleitschrägen 53 an den Formkernen 37 bis 40. Es sind auch andere als die bevorzugte dargestellte Ausführungsform des Schiebers 1 herstellbar. Insbesondere muss weder die Vertiefung 15 noch das bewegliche Stück 11 mit Sperrnocken 10 noch die "wing-lock"-Ausführung ausgebildet werden. Auch eine Ausführung mit zwei Zuglaschen, eventuell jeweils mit Sperrvorrichtung, ist denkbar. Anstatt für zwei Schieber kann das Werkzeug auch für nur einen oder eine grössere Anzahl Schieber ausgelegt werden.

Denkbar ist auch, in Umkehrung der beschriebenen Funktionsweise die Formkerne unter der Wirkung von Druckfedern in die Form einfahren zu lassen und die Formkerne gesteuert aus der Form herauszuziehen. Statt druckfedern 47 können auch pneumatische oder hydraulische Bewegungselemente eingesetzt werden. Zur Unterstützung des Öffnens des Werkzeugs bzw. für einen dichten Verschlusses können zusätzliche Druckfedern zwischen jeweils der Betätigungsplatte und der Matrize der beiden Werkzeughälften angeordnet sein.

## Patentansprüche

1. Verfahren zur Herstellung eines Reissverschlussschiebers im Spritzgussverfahren mit einer oberen (5) und einer unteren (6) Platte, die vorne durch einen Trennkeil (7) verbunden sind, wobei die obere Grundplatte (5) von vorne nach hinten von einem Bügel (4) überspannt wird, wodurch eine Öse gebildet wird, an der eine Zuglasche (2) beweglich befestigt ist, wobei vor dem Einspritzen der Giessmasse in die Spritzgussform vier Formkerne (37 - 40) aufeinander zu in den Bereich der Form eingeschoben werden, der der Öffnung der Öse entspricht, bis die Formkerne zusammentreffen, wobei sie den Hohlraum der Form in zwei voneinander getrennte Formteile aufteilen, deren eine den Schieberkörper (3) und deren andere die Zuglasche (2) modelliert,
**dadurch gekennzeichnet, dass** die obere Platte (5) durch einen Spalt (12) derart unterteilt wird, dass ein mit dem Ende des Bügels (4) verbundenes Teilstück (11) der oberen Platte gebildet wird, indem zwei der Formkerne (39, 40) im eingeschobenen Zustand in dem Formteil zur Ausbildung des Schieberkörpers (3) eine Trennwand ausbilden.

2. Werkzeug zur Durchführung des Verfahrens gemäss einem der Ansprüche 1 oder 2, bestehend aus einer Spritzgussform mit
- zwei Matrizen (25, 35), die im wesentlichen die Form für die vordere bzw. hintere Hälfte des Schieberkörpers (3) und der Zuglasche (2) aufweisen, und
- vier Formkernen (37 - 40), die in der Form so aufeinander zu verschiebbar angeordnet sind, dass sich ihre Stirnflächen berühren können, wobei die Stirnflächen im wesentlichen die Öse sowie den Quersteg (41) der Zuglasche (2) modellieren, der durch die Öse hindurchtritt,
**dadurch gekennzeichnet, dass** mindestens zwei der Formkerne Vorsprünge aufweisen, die einen die obere Platte (5) auftrennenden Spalt (12) modellieren.

3. Werkzeug gemäss Anspruch 2, dadurch gekennzeichnet, dass die Formkerne in einer gemeinsamen Ebene bewegbar angeordnet sind.

4. Werkzeug gemäss Anspruch 2 oder 3, dadurch gekennzeichnet, dass die Bewegungsrichtungen benachbarter Formkerne zueinander etwa in einem Winkel von 90° stehen.

5. Werkzeug gemäss einem der Ansprüche 2 bis 4, dadurch gekennzeichnet, dass der Spalt (12) einen Teil (11) der oberen Platte (5) des Reissverschlussschieberkörpers (3) abtrennt, der mit dem hinteren Ende des Bügels (4) verbunden ist.

6. Werkzeug gemäss einem der Ansprüche 2 bis 5, dadurch gekennzeichnet, dass eine Matrize (25) eine Vertiefung aufweist, um an dem abgetrennten Teil (11) einen zur unteren Platte (6) hin vorspringenden Sperrnocken (10) auszubilden.

7. Werkzeug gemäss einem der Ansprüche 2 bis 6, dadurch gekennzeichnet, dass der Spalt (12) stufenförmig augebildet wird, wobei die Stufe eine Bewegung des abgetrennten Teils (11) nach oben begrenzt.

8. Werkzeug gemäss einem der Ansprüche 2 bis 7, dadurch gekennzeichnet, dass die vier Formkerne eine Vertiefung (15) in der oberen Platte (5) unter dem Bügel (4) modellieren, wobei ausserhalb der Vertiefung (15) die Öse immer eine geringere Höhe als die Dicke des Querstegs (41) der Zuglasche aufweist, der durch die Öse hindurchtritt.

9. Werkzeug gemäss einem der Ansprüche 2 bis 8, dadurch gekennzeichnet, dass die Hinterenden der Formkerne Rollen (44) tragen, auf die an den Matrizen angeordnete Druckstücke (45) drücken können, um die Formkerne in die Form einzufahren.

10. Werkzeug gemäss einem der Ansprüche 2 bis 8, dadurch gekennzeichnet, dass das Hinterende der Formkerne als Gleitfläche (52) ausgebildet ist, die über entsprechende Gleitflächen (53) von verschiebbaren Keilen (51) gleiten können, wodurch die Formkerne (37 - 40) in die Form einfahrbar sind.

11. Werkzeug gemäss Anspruch 10, dadurch gekennzeichnet, dass die einschiebbaren Keile (51) einer Matrize über Betätigungsorgane (54, 56) mit der anderen Matrize oder einer Betätigungsplatte (24, 34) in Verbindung stehen.

12. Werkzeug gemäss einem der Ansprüche 2 bis 11, dadurch gekennzeichnet, dass zwischen den Formkernen (37 - 40) und den Matrizen (25, 35) Druckfedern (47) angeordnet sind.

13. Werkzeug gemäss einem der Ansprüche 3 bis 12, dadurch gekennzeichnet, dass zwischen den Formkernen (37 - 40) und der Matrize (25; 35) hydraulische oder pneumatische Bewegungselemente angeordnet sind.

14. Durch Spritzgiessen hergestellter Reissverschlussschieber (1) mit einer oberen (5) und einer unteren (6) Platte, die vorne durch einen Trennkeil (7) verbunden sind, wobei die obere Grundplatte (5) von vorne nach hinten von einem Bügel (4) überspannt wird, wodurch eine Öse gebildet wird, an der eine Zuglasche (2) beweglich befestigt ist, wobei der Schieberkörper (3) und die Zuglasche (2) jeweils aus einem Stück bestehen,
**dadurch gekennzeichnet, dass** ein mit dem hinteren Bügelende verbundenes Teilstück (11) der oberen Platte durch einen Spalt (12) vom Rest der oberen Platte (5) getrennt ist und dass von dem Teilstück nach unten ein Sperrnocken (10) herausragt, um in den Zwischenraum zwischen zwei Zähnen einer Reissverschlusskette hineinzuragen.

15. Reissverschlussschieber gemäss Anspruch 14, dadurch gekennzeichnet, dass das Teilstück (11) die Form eines nach vorne gerichteten Keiles hat.

16. Reissverschlussschieber gemäss einem der Ansprüche 14 bis 15, dadurch gekennzeichnet, dass der Spalt eine Stufenform aufweist, wobei die Stufe (13, 14) ein Anschlag für eine Bewegung des Teilstücks (11) nach oben ist.

17. Durch Spritzgiessen hergestellter Reissverschlussschieber gemäß Anspruch 14, wobei, wobei an der oberen (5) und der unteren (6) Platte Seitenführungen (8, 9) für die Zähne einer Reissverschlusskette vorhanden sind,
**dadurch gekennzeichnet, dass** die Enden der Seitenführungen (8, 9) zum Trennkeil (7) hin abgeknickt oder abgebogen geformt sind, um eine ungewollte Bewegung des Reissverschlussschiebers (1) durch Einhaken dieser Enden in die Zähne einer Reissverschlusskette zu verhindern.

## Claims

1. Method for manufacturing a zip fastener slide by the injection moulding process, said slide having an upper (5) and a lower (6) plate which are connected one to another at the front portion by a separating wedge (7), the upper plate (5) being spanned from the front backwards by a bow (4) so that an eye is formed in which a pull tab (2) is movably secured, four mould cores (37 to 40) being pushed towards one another, prior to the injection of the casting mass into the injection mould, into that region of the mould which corresponds to the opening of the eye until the mould cores come together, whereby they subdivide the mould cavity into two mould portions separated from another, one of which forming the slide body (3) and the other the pull tab (2), characterised in that the upper plate (5) is sub-divided by a slot (12) in such a manner that a portion (11) of the upper plate connected to the end of the bow (4) is formed in that two of the mould cores (39, 40), when pushed into the mould region for shaping the slide body (3), form a partition wall.

2. Tool for carrying out the method according to claim 1, comprising an injection mould having
- two matrices (25, 35) substantially including the mould for the forward and the rearward half, respectively, of the slide body (3) and of the pull tab (2), and
- four mould cores (37 to 40) being arranged within the mould to be displaceable towards one another in such a way that their front faces come into contact with one another, the front faces substantially fashion the eye and the cross web (41) of the pull tab (2) which passes through the eye,
characterised in that at least two of the mould cores have projections which fashion a slot (12) subdividing the upper plate (5).

3. Tool according to claim 2, characterised in that the mould cores are disposed to be movable in a common plane.

4. Tool according to claim 2 or 3, characterised in that the directions of movement of adjacent mould cores are at an angle of about 90° to one another.

5. Tool according to any one of claims 2 to 4, characterised in that the slot (12) separates off a portion (11) of the upper plate (5) of the zip fastener slide body (3) which is connected to the rearward end of the bow (4).

6. Tool according to any one of claims 2 to 5, characterised in that one matrix (25) has a recess in order to fashion a locking cam (10) projecting towards the lower plate (6) and formed to the separated portion (11).

7. Tool according to any one of claims 2 to 6, characterised in that the slot (12) has a stepped configuration, each step limiting an upward movement of the separated portion (11).

8. Tool according to any one of claims 2 to 7, characterised in that the four mould cores fashion a recess (15) in the upper plate (5) below the bow (4), the eye having outside the recess (15) always a smaller height than the thickness of the cross web (41) of the pull tab which passes through the eye.

9. Tool according to any one of claims 2 to 8, characterised in that rear ends of the mould cores carry rollers (44) on which pressure pieces (45) arranged at the matrices can press in order to move the mould cores into the mould.

10. Tool according to any one of claims 2 to 8, characterised in that the rear end of the mould cores is shaped as a sliding surface (52) capable of sliding on corresponding sliding surfaces (53) of displaceable wedges (51) so that the mould cores (37 to 40) can be inserted into the mould.

11. Tool according to claim 10, characterised in that the insertable wedges (51) of one matrix are connected by actuating elements (54, 56) to the other matrix or to an actuating plate (24, 34).

12. Tool according to any one of claims 2 to 11, characterised in that pressure springs (47) are disposed between the mould cores (37 to 40) and the matrices (25, 35).

13. Tool according to any one of claims 3 to 12, characterised in that hydraulic or pneumatic motion elements are disposed between the mould cores (37 to 40) and the matrix (25; 35).

14. Zip fastener slide (1), manufactured by injection moulding, comprising an upper (5) and a lower (6) plate which are connected one to another at the front portion by a separating wedge (7), the upper plate (5) being spanned from the front backwards by a bow (4) so that an eye is formed in which a pull tab (2) is movably secured, the slide body (3) and the pull tab (2) each consisting of a sole piece, characterised in that a portion (11) of the upper plate which is connected to the rear bow end is separated from the remainder of the plate (5) by a slot (12), and that a locking cam (10) projects downward from said portion in order to engage the free space between two teeth of a zip fastener chain.

15. Zip fastener slide according to claim 14, characterised in that said portion (11) is shaped as a forward directed wedge.

16. Zip fastener slide according to any one of claims 14 to 15, characterised in that the slot (12) has a stepped shape, the step (13, 14) forming a stop means for an upward movement of said portion (11).

17. Zip fastener slide according to claim 14, manufactured by injection moulding, its upper (5) and lower (6) plate comprising lateral guides (8, 9) for the teeth of a zipper chain, characterised in that the ends of the lateral guides (8, 9) are broken or bent off towards the separating wedge (7) in order to prevent an unintentional movement of the zip fastener slide (1) by hooking these ends into the teeth of a zip fastener chain.

## Revendications

1. Procédé pour fabriquer un curseur de fermeture à glissière par la technique de moulage par injection, ce curseur comprenant une plaque supérieure (5) et une plaque inférieure (6), ces plaques étant reliées l'une à l'autre par un coin de séparation (7), la plaque de base supérieure (5) étant voûté d'un bout à l'autre par une bride (4), une languette (2) étant mobilement fixée dans l'oeillet ainsi formé, quatre noyaux de moule (37 à 40) étant poussés, avant l'injection de la masse à mouler dans le moule pour injection, les uns contre les autres dans la région du moule qui correspond à l'ouverture de l'oeillet jusqu'à ce que les noyaux de moule entrent en contact mutuel, subdivisant ainsi le creux du moule en deux parties moulantes séparées l'une de l'autre dont une façonne le corps du curseur (3) et l'autre la languette (2), caractérisé en ce que la plaque supérieure (5) est subdivisée par une fente (12) de sorte qu'une partie (11) de la plaque supérieure est formée, reliée au bout de la bride (4), en ce que deux noyaux de moule (39, 40) forment dans leur position insérée une paroi de séparation dans la partie du moule qui façonne le corps du curseur (3).

2. Outil pour la mise en oeuvre du procédé selon la revendication 1, consistant en un moule pour injection comprenant
- deux matrices (25, 35) formant sensiblement le moule pour la moitié avant ou arrière, respectivement, du corps du curseur (3) et pour la languette (2), et
- quatre noyaux de moule (37 à 40) qui sont disposés dans le moule pour pouvoir être déplacés les uns contre les autres de telle manière que leurs faces frontales peuvent entrer en contact mutuel, ces faces frontales étant agencées pour façonner substantiellement l'oeillet ainsi que la traverse (41) de la languette (2) qui passe par l'oeillet,
caractérisé en ce qu'au moins deux noyaux de moule comportent des parties en saillie aptes à modeler une fente (12) subdivisant la plaque supérieure (5).

3. Outil selon la revendication 2, caractérisé en ce que les noyaux de moule sont disposés pour pouvoir se déplacer dans un plan commun.

4. Outil selon la revendication 2 ou 3, caractérisé en ce que les directions de mouvement des noyaux de moule avoisinants renferment un angle d'environ 90°.

5. Outil selon l'une des revendications 2 à 4, caractérisé en ce que la fente (12) sépare une partie (11) de la plaque supérieure (5) du corps du curseur de fermeture à glissière (3) qui est reliée au bout arrière de la bride (4).

6. Outil selon l'une des revendications 2 à 5, caractérisé en ce qu'une matrice (25) comporte un évidement pour façonner une came de blocage (10) sur la partie séparée (11), faisant saillie vers la plaque inférieure (6).

7. Outil selon l'une des revendications 2 à 6, caractérisé en ce que la fente (12) est agencée pour présenter une forme étagée, l'étage limitant un mouvement de la partie séparée (11) vers le haut.

8. Outil selon l'une des revendications 2 à 7, caractérisé en ce que les quatre noyaux de moule façonnent une encoche (15) dans la plaque supérieure (5) au-dessous de la bride (4), l'oeillet ayant, en dehors de l'encoche (15), toujours une hauteur plus petite que l'épaisseur de la traverse (41) de la languette qui passe par l'oeillet.

9. Outil selon l'une des revendications 2 à 8, caractérisé en ce que les bouts arrière des noyaux de moule comportent des rouleaux (44), des pièces de pression (45) disposées aux matrices pouvant presser sur les rouleaux pour insérer les noyaux dans le moule.

10. Outil selon l'une des revendications 2 à 8, caractérisé en ce que l'extrémité arrière des noyaux de moule est agencée pour former un plan de glissement (52) pouvant glisser au-dessus de surfaces de glissement (53) de coins déplaçables (51) afin d'insérer les noyaux (37 à 40) dans le moule.

11. Outil selon la revendication 10, caractérisé en ce que les coins déplaçables (51) d'une matrice sont reliés par des élément d'actionnement (54, 56) à l'autre matrice ou à une plaque d'actionnement (24, 34).

12. Outil selon l'une des revendications 2 à 11, caractérisé en ce que des ressorts de pression (47) sont disposés entre les noyaux de moule (37 à 40) et les matrices (25, 35).

13. Outil selon l'une des revendications 3 à 12, caractérisé en ce que des moyens d'actionnement hydrauliques ou pneumatiques sont disposés entre les noyaux de moule (37 à 40) et la matrice (25; 35).

14. Curseur de fermeture à glissière (1), fabriqué par moulage par injection, comprenant une plaque supérieure (5) et une plaque inférieure (6) reliées l'une à l'autre à l'avant par un coin de séparation (7), la plaque de base supérieure (5) étant voûtée d'un bout à l'autre par une bride (4) formant ainsi un oeillet auquel une languette (2) est mobilement attaché, le corps du curseur (3) et la languette (2) étant chacun formés d'une seule pièce, caractérisé en ce qu'une partie (11) de la plaque supérieure est reliée au bout arrière de la bride et est séparée par une fente (12) du reste de la plaque supérieure (5), et qu'une came de blocage (10) s'élève au-dessus de la partie séparée vers le bas afin de pénétrer dans l'espace entre deux dents d'une chaîne de fermeture à glissière.

15. Curseur de fermeture à glissière selon la revendication 14, caractérisé en ce que la partie séparée (11) présente la forme d'un coin dirigé vers l'avant.

16. Curseur de fermeture à glissière selon l'une des revendications 14 à 15, caractérisé en ce que la fente présente une configuration étagée, l'étage (13, 14) constituant une butée pour un mouvement de la partie séparée (11) vers le haut.

17. Curseur de fermeture à glissière selon la revendication 14, fabriqué par la technique de moulage par injection, les plaques supérieure (5) et inférieure (6) présentant des guides latéraux (8, 9) pour les dents d'une chaîne de fermeture à glissière, caractérisé en ce que les extrémités des guides latéraux (8, 9) sont pliées ou cintrées vers le coin de séparation (7) afin d'empêcher, par l'accrochage de ces extrémités dans les dents d'une chaîne de fermeture à glissière, un mouvement involontaire du curseur de fermeture à glissière (1).
